# EUROPEAN PATENT APPLICATION

(11) **EP 1 398 065 A2**
(43) Date of publication of application: **17.03.2004**
(21) Application number: 03023196.3
(22) Date of filing: 27.04.2001
(51) Int. Cl.: B01D 25/26, B01D 25/00, B01D 29/41

(54) **Filter device**

(30) Priority: 28.04.2000 US 200510 P
(62) Divisional of application: 01928918.0
(71) Applicant: Millipore Corporation, Billerica, Massachusetts 01821-3405 (US)
(72) Inventor: Decoste, David, Chelmsford MA 01824 (US); Pereira, Brian, Salem NH 03079 (US); Messing, Jack, Townsend MA 01469 (US); Proulx, Stephen, Boxboro MA 01719 (US); Renganath, Naren, Burlington MA 01803 (US)
(74) Representative: Henkel, Feiler & Hänzel

(57) **Abstract**

The invention relates to a filter device comprising a non-lenticular central support layer (124) and one or more layers of relatively flat, porous fibrous filtration media (121) positioned upstream on both sides of the central support layer (124). An inner seal (131) is provided between the filtration media (121) and the support layer (124) and an outer seal (130) is formed over the filtration media (121) and the support layer (124) to form a liquid seal such that all fluid to be filtered must pass through the filtration media (121) before entering the support layer (124) and reaching an outlet of the filter device which is in fluid communication with the support layer (124).

## Description

The present invention provides filters and methods for manufacturing such filters. It relates to disposable porous fibrous filters for use in permanent or re-usable housings and methods of manufacturing same.

### Background of the Invention

Filtration of fine sized particles and contaminants from fluids has been accomplished by the use of various porous filter media through which the contaminant fluid is passed. Of particular interest are biological broths used in the manufacture of proteins, monoclonal antibodies and other such biopharmaceuticals. Another area of interest is in the filtration of grape juice for the manufacture of wine, the filtration of various other fruit juices and the filtration of beer.

To function as a filter, the media must allow the fluid, typically water or an aqueous based fluid to pass through the media while retaining the particulate contaminant. This retention of contaminant is accomplished through the operation of different distinct mechanisms of filtration. The first is a simple mechanical straining and the second is electrokinetic particle capture and adsorption. Other mechanisms may also play a lesser role in the retention of the contaminants.

In mechanical straining, a particle is removed by physical entrapment when it attempts to pass through a pore smaller than itself. in electrokinetic capture, the particle collides with a surface within the filter and is retained on the surface by short range attractive forces.

The traditional device for this filtration/clarification step has been to use a series of porous pads, formed of a blend of natural and/or synthetic fibers such as thermoplastic fibers like polyethylene and polypropylene and natural fibers such as cellulose, cellulosic derivatives such as cellulose acetate, rayon, cotton, wood pulp and one or more fillers or filtration aids such as diatomaceous earth, silica, carbon, talc, perlite, molecular sieves, clays, etc. and mixtures thereof. See US 2,788,901 3,158,532, 4,305,782. To enhance the electrokinetic capture mechanism, the use of various charge modifiers has been suggested to control the zeta potential of the sheet constituents and maximize performance of the device. Typically these are cationic modifiers since most naturally occurring contaminant surfaces are anionic at the pH of the fluids used. See US 4,305,782, 4,007,113, 4,007,114 and 5,085,784.

The filters are made as supported cells with the porous media mats being attached to the outer surfaces of a central support device. The supported cells are formed on a lenticular (double convex) support structure formed of a series of radially extending convex shaped ribs which are held to each other by a series of spaced rings at various circumferences from the center of the radial ribs. See US 4,704,207 and 4,783,262. The spaces between the ribs form the channels through which fluid that has flowed through the filter media is collected and sent to the core for further use. The rings are arranged in a manner so that the fluid flow is only minimally hindered. Typically, adjacent rings are formed on opposite sides of the ribs so that flow is over one ring and then under the other.

The cells may be used singularly or in groups. See US 2,788,901 and 5,085,784. Typically the filter cells are used in groups (generally of 16 to 20 per group) stacked upon a central core within a housing. Fluid to be filtered enters the bottom or side adjacent the bottom of the housing and flows through the filter media to the lenticular support structure that direct the fluid to the core where it is collected and removed from the housing through an outlet in the bottom or side of the housing.

Several problems exist with the current product design.

The lenticular design is bulky and takes up a large amount of space, thereby decreasing the packing density or the amount of filter material that can be contained in a given volume. This typically means that commercial scale devices are quite large and have a large amount of open area in them. Typically, one must use a series of housings containing a series of these lenticular devices in order to provide the desired amount of filtration material. This is costly and requires additional floor space that may be at a premium in production areas.

The lenticular design is difficult to make in small sizes and therefore linearly scalable devices from the lab scale to pilot scale to production scale are not available.

Additionally, the lenticular design is large, heavy and formed of a large single molded piece of plastic. They are large in that the lenticular design is deliberately made so there is plenty of space for fluid flow downstream of the media. They are heavy as they need to be reinforced so as to support the weight of both the support (often called a spider) as well as the media (especially when wet) and to limit the amount of distortion and deflection during use.See US 4,783,262. Being formed of a large plastic molded part, they tend to warp and distort when under pressure and/or higher temperatures (that are often encountered in their use). The molded plastic has built in stresses as is common with molded plastic parts and these stresses, especially when subjected to additional heat and/or pressures, cause the plastic support to bend and warp causing twisting and buckling of the individual filter elements (or cells) and cell movement which causes the adjacent cells to touch causing flow limitations and distorting and/or cracking the media which leads to defective filtration.

What is desired is a design that enhances the packing density of the filter and which is linearly scalable. The present invention provides such a device and a method of manufacturing such devices.

### Summary of the Invention

The present invention provides a non-lenticular filter comprising one or more relatively flat or non-lenticular supports and one or more layers of porous media positioned on the support(s) and liquid tightly sealed with the relatively flat support(s) such that all fluid must pass through the porous media before reaching an outlet to the filter. In one embodiment of the present invention, the support is comprised of a centrally located, relatively flat structure such as a bi-directional screen.

It is an object of the present invention to provide a filter suitable for use in disposable filters, including so-called capsule filters.

It is an object of the present invention to provide a cost efficient method of manufacturing filters that can accommodate the variability in the heights of media, including multiple layers.

It is another object of the present invention to provide a series of one or mo re filter elements suitable for use with permanent housings.

### Brief Description of the Drawings

Figure 1A is a cross sectional drawing of a device according to the prior art.
Figure 1 B is a cross sectional drawing of a device according to the prior art.
Figure 2 is a sectional view of a filter according to one embodiment of the present invention.
Figure 3A is a top view of the outlet support.
Figure 3B is a top view of the inlet support.
Figure 4 shows a large scale embodiment of the present invention in cross section.
Figure 5 shows a planar view of a selected support.
Figure 6 shows an alternative design of the support.
Figure 7 shows an alternative design of the support.
Figure 8 shows a cross sectional view of a series of devices according to the present invention.
Figure 9 shows a cross sectional view of a series of devices according to another embodiment of the present invention.

### Description of the Specific Embodiments

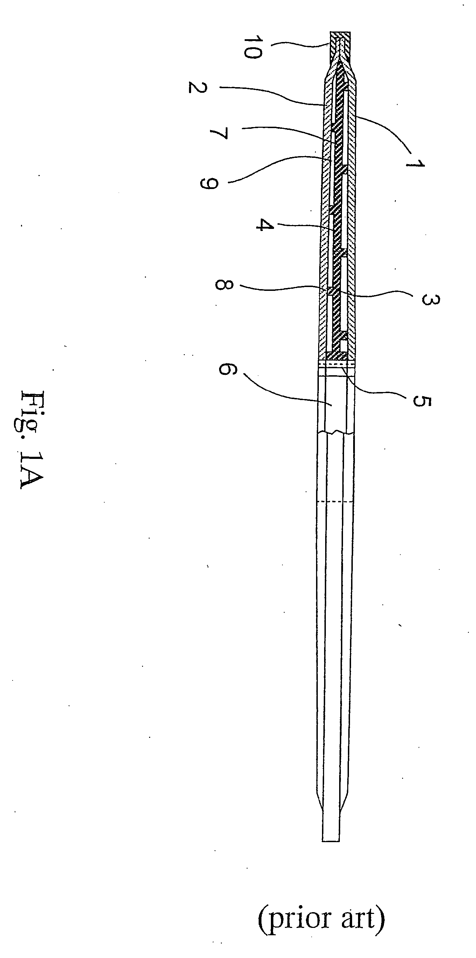

Figure 1A shows filter disk of porous fibrous media for large scale applications according to the prior art. In this device, there are two layers of fibrous media 1,2 attached to opposite surfaces 3,4 of a lenticular (double convex) support disk 5. The support disk 5 is formed of a central aperture 6 from which several support arms 7 extend outwardly and radially. A series of spacers 8 extend from the arm and support the media layers 1,2. A space between the arms 7 and spacers 8 forms a channel 9 that is in fluid communication with the central aperture 6. The outer peripheral edges of the porous media and the arms are sealed by an edge 10 which provides an integral fluid-tight seal to the outer edge of the device. Therefore all fluid entering the channel must do so by having passed through the layer of porous media 1,2 and the channels 9 before reaching the central aperture 6.

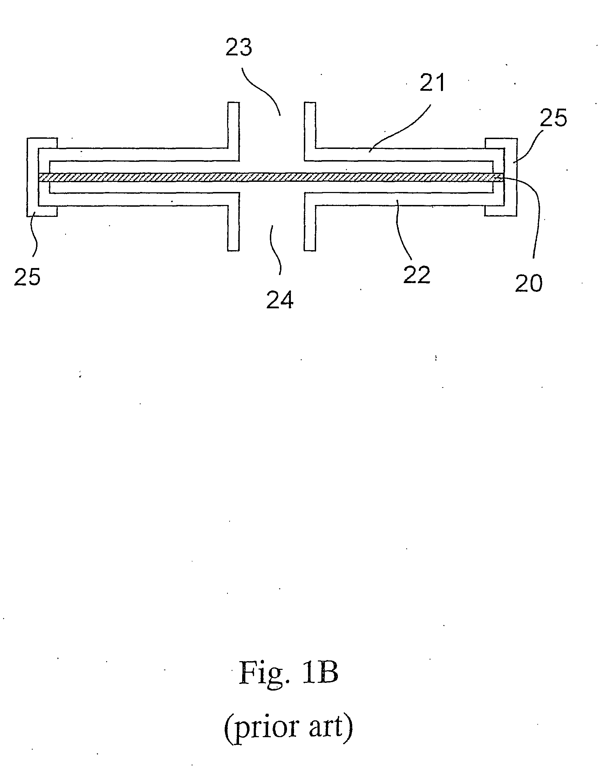

Figure 1B shows a typical small scale device. Here, the media 20 as a cut disk or series of disks (one shown) is sealed between an upper housing half 21 and a lower housing half 22. The upper housing 21 has an inlet 23, and the lower housing 22 an outlet 24. The edges of the housings 21 and 22 and the media 20 are sealed by an overmolding 25 or other such seal so that all fluid must pass through the media 20 before reaching the outlet 24.

A small scale embodiment of the present invention, such as may be used in the laboratory, in a pilot scale process and even in a large scale process if so desired, provides a filter device comprising a first support including an inner seal and one or more inlets for receiving fluid, a second support including an outer seal and being in fluid communication with an outlet for the cartridge, and media positioned between the supports. In this embodiment, it is preferred that the inner and outer seals be knife edge seals.

In a further embodiment, the second support is an end cap. Preferably, the first support is sandwiched between two independent layers of media and said first support knife seal contacts said media.

In a preferred embodiment of this design, the filter includes multiple layers of media. Such multiple layers may also be different materials. Three different grades of media, diatomaceous earth (DE), cellulose binder (CE) and carbon are considered the most useful depth medias for the present invention. Each such media has different pore size ranges, so a great variety of different cartridges can be made from the present invention. DE has at least 12 pore size ranges, CE has at least 8 pore size ranges and carbon has at least 4. These media can be obtained from a variety of sources such as MILLISTAK+™ media available from Millipore Corporation of Bedford, Massachusetts. Filter Materials of Waupaca, Wisconsin also produces a wide array of media suitable for the device of the present invention.

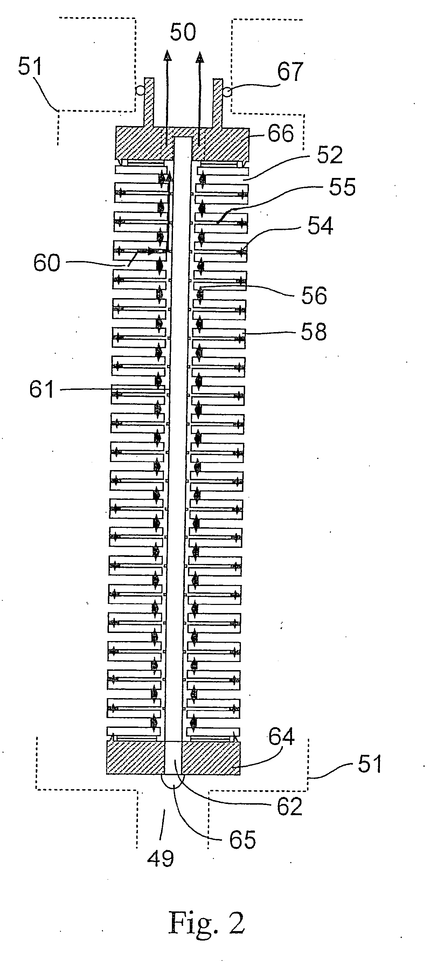

In a preferred embodiment of the small scale device according to the present invention, the first support /media sandwich is further sandwiched between two second supports and said second support knife seal contacts said media. Figure 2, described in detail below, provides an example of such multiple layering of media.

In order to use the knife seals to their greatest effect, they should be forced partially into the media. This action substantially blocks flow of fluid through the media adjacent the seals. The present invention provides a press to maintain pressure on the knife seals into the media so the flow is as desired. Alternatively, one can bond the external surface and/or the internal surface of the media, or hold either the internal and/or external surfaces together with a net or clamps or bands(not shown), however, in the small scale device, it is preferable that the press be a rod fixed to a cap on each end thereof. More preferably, the rod is positioned Within a cavity designed to receive filtrate. In the large scale device, it is preferred that both the internal surfaces and external surfaces be connected. One may use a combination of the rod on the interior and bands, clamps, nets or adhesive bands on the exterior to maintain compression and the desired spacing.

The present invention of the first embodiment also provides a method of manufacturing a filter cartridge, the method comprising inserting one or more layers of media between an inlet support including an inner knife seal and an outlet support including an outer knife seal to create a sandwich, subjecting said sandwich to pressure sufficient to create seals at the intersection of knife seals and media and fixing the position of the components of the sandwich with respect to each other such that said seals remain.

Preferably, the amount of pressure applied is pre-determined. The inventors have determined the appropriate pressures for a variety of materials, the pressure can be measured with a torque wrench or load cell. Table 1 provides the stacking pressures and corresponding heights of a variety of materials available from Filter Materials.

**TABLE 1**

| Stacking Pressures and Heights for a Variety of Filter Materials | | | | |
|---|---|---|---|---|
| | | Stacking pressure (psi) | Stacking height - high (in) | Stacking height - low (in) |
| Diatomaceous earth | 75 DE | 70 | 7.875 | 7.625 |
| | 70 DE | 70 | | |
| | 65 DE | 70 | | |
| | 60 DE | 70 | | |
| | 55 DE | 65 | | |
| | 50 DE | 65 | | |
| | 45 DE | 60 | | |
| | 40 DE | 60 | | |
| | 35 DE | 60 | | |
| | 30 DE | 60 | | |
| | | | | |
| Cellulose | 50 CE | 50 | 8.25 | 8.0625 |
| | 40 CE | 50 | | |
| | 35 CE | 50 | | |
| | 30 CE | 50 | | |
| | 25 CE | 50 | | |
| | 20 CE | 50 | | |
| | 15 CE | 50 | 6.75 | 6.8125 |
| | | | | |
| Carbon | 40 AK | 50 | 8.8125 | 8.5 |
| | 40 AH | 50 | | |
| | 40 AF | 50 | | |
| | 40 AC | 50 | | |

Using Table 1, one can consider the nature of the filter material in selecting the pre-determined pressure.

As fixing the components together is an important consideration of the present embodiment, preferably this embodiment is practiced by inserting the assembled component sandwich (supports and media layers) between first and second end caps, said first end cap having a first end of a rod fixed thereto, exerting a force on the sandwich sufficient to set the knife seals into the media and fixing the second rod end to the second end cap.

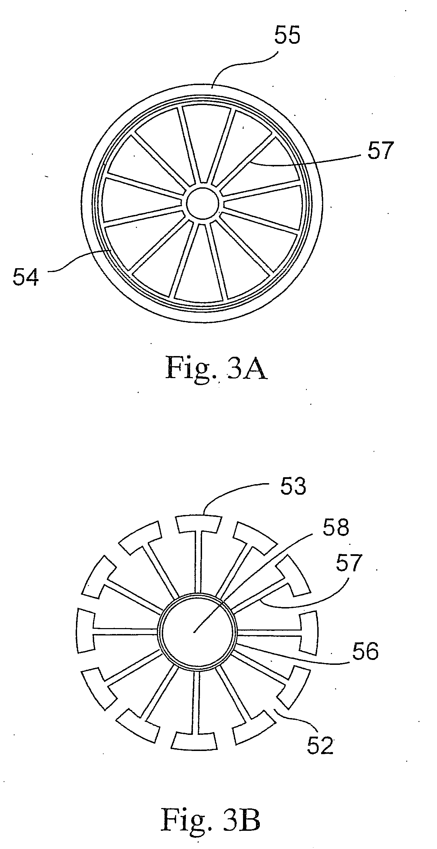

In a preferred embodiment of the present invention, the rod traverses a cavity within the cartridge. Note that the inlet support and the outlet support as provided in Figures 3A and B can accommodate a rod traversing through the center of the cartridge. This center cavity also serves as a conduit for the filtrate.

In a preferred embodiment of the present invention, the second end cap has an aperture designed to receive said second end and the rod is fixed therein after the appropriate force is exerted on the sandwich. In a preferred embodiment, the rod is fixed therein by bonding. In another embodiment, the aperture and the rod contain screw threads and said rod is fixed in said aperture by being screwed therein.

The filter of this invention preferably comprises one or a plurality of media each having the same or different micron retention size. Representative media useful for forming the filter include the fiber of polyolefins such as polyethylene, polypropylene, cellulose including cellulose/diatomaceous earth or silica blends as are available from Millipore Corporation of Bedford, Massachusetts under the brand name MILLISTAK+™ filters and from Filter Materials of Waupaca, Wl as well as cellulose derivatives such as cellulose acetate, cotton, polyamides, polyesters, fiberglass, polytetrafluoroethylene (PTFE), fluoropolymers such as PFA, MFA and FEP or the like. Celluosic media or cellulosic composite media are preferred such as the MILLISTAK+™ filters. These materials and their methods of making them either by a wet process ( similar to papermaking) or a dry process are well known in the art, See US 5,928,588 and 4,007,113 and 4,007,114 for examples of making such media.

Similar materials are appropriate for the structural portions of the cartridge. Preferably, the end caps, supports and rod are made of polypropylene. Other materials suitable for use in these applications can include but are not limited to thermoplastics such as other polyolefins such as polyethylenes including ultrahigh molecular weight polyethylenes, copolymers or terpolymers of polyolefins; nylons; PTFE resin, PFA, PVDF, ECTFE, and other fluorinated resins, particularly perfluorinated thermoplastic resins; polycarbonates; metallocene derived polymers, polysulphones; modified polysulphones such as polyethersulphone, polyarylsulphones or polyphenylsulphones; any glass or other reinforced plastic; or a metal such as stainless steel, aluminum, copper, bronze, brass, nickel, chromium or titanium or alloys or blends thereof.

The filter can be formed from one or more layers of pads, sheets or disks (here after simply referred to as "sheets") by stacking the sheets within a housing in a manner such that an open volume within the housing upstream of the filter is formed. The fitter sheet or sheets can have the same pore size or varying pore size such that the micron retention characteristic of a portion of the filter varies along the length of the housing. It is likely that multiple layers of s tacked material could be positioned on either side of an inlet support to facilitate the use of different types of media.

Referring to Fig. 2, an inlet flow 49 flows into a housing 51 containing the cartridge of the present invention. Fluid to be filtered flows through the inlet flow channel 52 created by the inlet support 53 and the two layers of media 58 positioned on either side. As the inlet support knife seal 56 prevents flow to the filtrate cavity 61, the fluid is forced through the depth media 58 for filtration. The flow path 60 provides how after the filtrate leaves the depth media 58, the outlet support knife seal 54 prevents back flow of filtrate. The rod 62 is fixed to an end cap 64 and an outlet end cap 66 containing perforations (not shown) that allow the filtrate to escape the cartridge and the housing.

The nub 65 is an artifact of the manufacturing process and is not required. The rod 62 is fixed to the outlet end cap 66. The end cap 66 is sealed to the housing 51 adjacent the outlet 50 so that all fluid entering the outlet 50 must first pass through the media 58. In Figure 2, it is shown by being sealed with a gasket 67. Other means such as bonding of the end cap 66 to the portion of the housing 51, the use of different gasket configurations and placements and other sealing arrangements for cartridge designs as are well known in the art may be used. The components of the cartridge are then assembled in a manner consistent with Figure 2. Then, pursuant to Table 1, a force is exerted on the end cap 64 until the desired pressure is reached, depending upon the material and the height desired. The rod 62 is then bonded to the end cap 64, creating the nub 65 as any excess rod is cut away.

Figure 3B provides a top view of the inlet support 53 and Figure 3A provides a top view of the outlet support 55. Both supports provide ribs 57 that facilitate the separation and support of the media layers. These ribs are not lenticular in design, but are relatively flat or planar in design. The ribs 57 may be circular, square or polygonal in cross section. The separation provides the channels through which fluid that has passed through the media may reach the outlet of the device. The inlet support provides an inner knife seal 56 and one or more inlet channel openings 52. The outlet support 55 provides an outer knife seal 54. Both supports provide center apertures 58 to allow for the flow of filtrate.

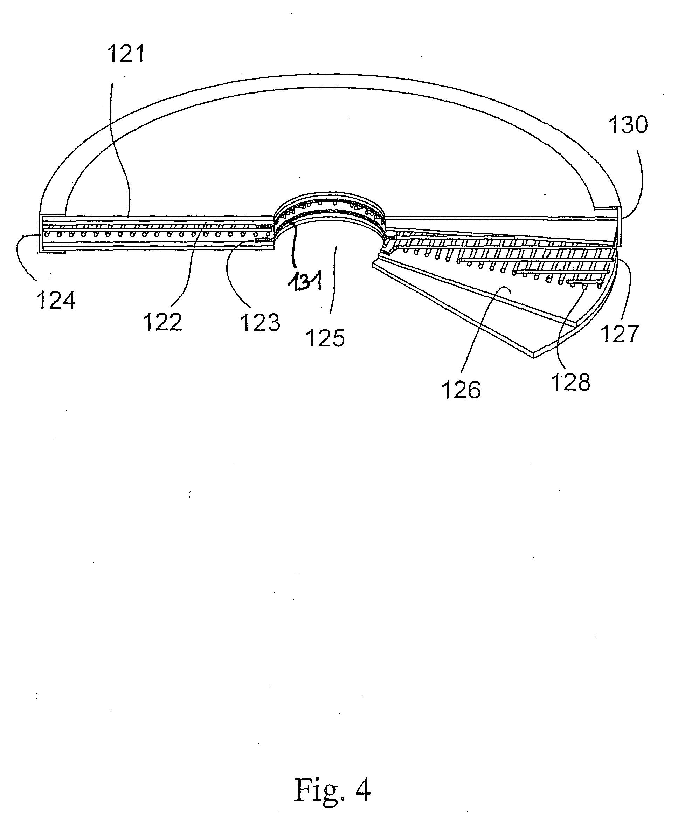

Figure 4 shows a preferred embodiment of the present invention for large scale or production filtration. In this device, there are one or more layers of fibrous media 121, two layers being shown, attached to opposite surfaces 122, 123 of a central support and support layer 124. This layer 124 is unlike the lenticular support discs of the prior art. It is formed of a relatively flat support such as a screen, preferably a bi-directional screen or a perforated sheet of material such as a sheet of plastic or metal having a series of holes formed throughout its surface or the radially projecting ribs as described above in Figures 3A and B. If desired, when using a perforated sheet, one may add some corrugations or discrete standoffs or spacer points to the sheet to create the spacing needed for the easy flow of fluid from the media to the outlet of the device. Alternatively, one can use two layers of perforated sheets with spacer points or standoffs formed on the surfaces of one or both layers that face the opposite layer so as to form a flat (non-lenticular) support with a channel in the center that is in fluid communication with the outlet.

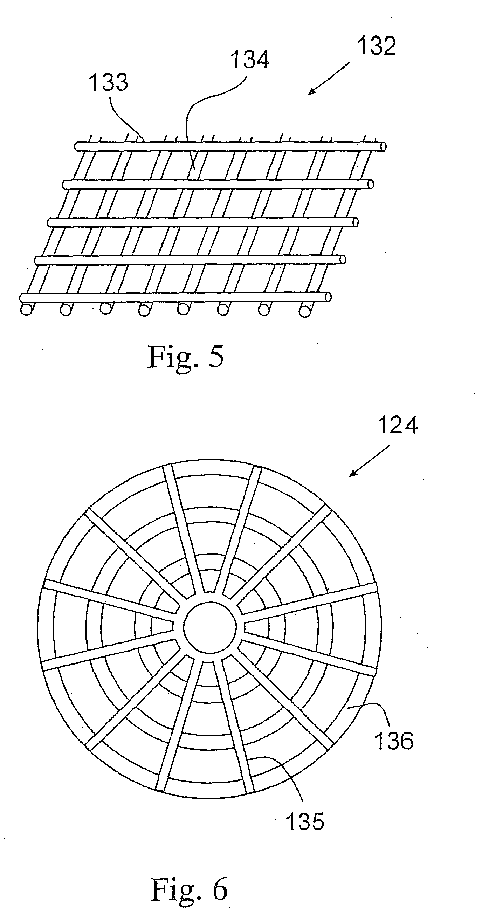

Large scale devices are typically contained within metal, preferably stainless steel such as 316 stainless steel housings which contain an inlet on the lower side or bottom and an outlet through a center hollow shaft. The filters are assembled either individually, as a subseries of the entire stack or as an entire stack on the center shaft. See US 5,085,780 Figure 5 for an example of such a well-known large scale housing.

In the embodiment shown in Figure 4, the use of the preferred bi-directional screen is shown. In the support 124 is formed a central aperture 125. The space 126 between the upper support layer 127 and the lower support layer 128 forms a channel that is in fluid communication with the central aperture 125. The outer peripheral edges of the porous media 121 and the support layer 124 are sealed by an edge 130 that provides an integral fluid-tight seal to the outer edge of the device. Optionally, and preferably, a disk 131 is interposed between the support layer 124 and the downstreammost layer of the fibrous media 121 around the central aperture 125. This disc 131 prevents any collapse of the media 121 into the support layer 124 as the inner edge of the assembly is compressed to form a liquid tight seal around the inner periphery of the media. Therefore all fluid entering the core must do so by having passed th rough the layer of porous media and the support layer.

Alternatively, one may injection mold or adhere a disc 131 to the central aperature 125 to maintain it in place. Another embodiment is to integrate it into the porous media, such as by casting it in place with the formation of the media.

Figure 5 shows a material useful as the support layer 124 of the embodiment of Figure 4. It is a bi-directional screen 132 having an upper layer 133 of parallel strips secured to a lower layer 134 of parallel strips such that the strips of the upper layer 133 are arranged at an angle to the direction of the strips of the lower layer 134. The strips of the first layer 133 are arranged at an angle between about 5 and 175° of the strips of the second layer 134. Preferably, the strips of the first layer 133 are arranged at an angle of between about 30 and 150° of the strips of the second layer 134, more preferably between about 60 and 120° of the strips of the second layer 134.

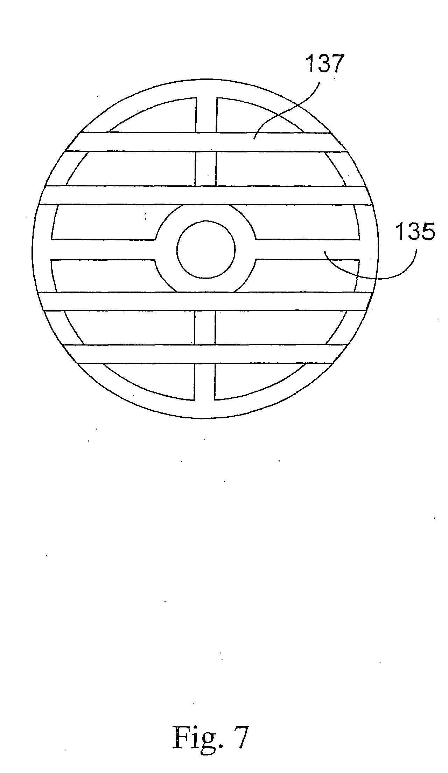

Figure 6 shows an alternative embodiment of the support layer 124 of Figure 4. In this embodiment, one layer 135 of the support structure 124 is formed radially of flat (non-lenticular) strips from a central portion with the other layer 136 intersecting one or both surfaces of the radial layer 135 as a series of concentric rings of varying and progressively larger diameters as they get farther from the center of the layer. Alternatively, the other layer may be formed of parallel strips such as is shown in Figure 7 by layer 137.

The form of the support layer is not critical so long as it is self-supportive, flat ( non-lenticular) and capable of maintaining that fluid pathway between the media and the central aperture in use.

Screening, especially bi-directional screening is preferred due to its high flow and strength, low cost and the ability to simply purchase the material and not needing to make specially molded components such as lenticular ribs and connecting arcs. These screens have two layers of strips which are formed on top of each other. As shown in Figure 5, they differ from traditional screen in that the strips of one layer do not weave over and under the other layer. Bi-directional screening is available from a variety of sources including US Netting.Inc, dba Naltex of Austin, Texas. Traditional screening (where one layer is woven over and under the other layer) can be used provided it meets the required levels of flow and strength.

A preferred bi-directional screen will use strips from about 0.046 inch (.117mm) to about 0.2inch (5.08mm) in thickness. The layer should be made of components thick enough to provide the flow and strength characteristics desired, preferably without losing the space advantage caused by the use of the flat material rather than the lenticular devices of the past.

The number of openings in a given area of structure can vary widely, but should be enough to generate good flow at low pressure differentials and to be supportive of itself and the media imposed upon it. Typically they will have openings from about 3 mm by 3mm to about 15mm to about 15mm. Generally, the higher the opening count per a given area, the smaller the openings, the greater the resistance to flow and the greater the strength. Conversely, the lower the openings number per given area, the greater the size of the openings and the greater the flow and the less strength imposed by the screen. One simply needs to balance these factors in selecting the correct sized screen.

Depending upon the angle selected between the two layers, one will get either a square or polygonal shape (such as a diamond design). Additionally, depending on whether the spacing between the strips of each layer is the same or different, one can form a square, rectangular or other polygonal shape.

If more than one layer of porous media is used, they may be cast upon each other and /or on to the non-lenticular support structure. They may be arranged as a group and sealed together as a unit by edge seals, compression seals such as clamps or knife edges and other means well known in this art.

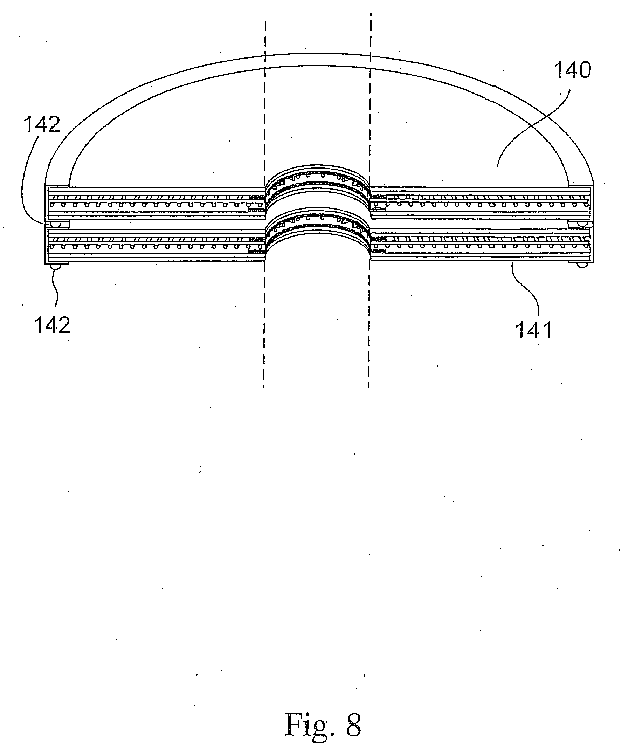

Figure 8 shows a cross sectional view of two adjacent disks according to the present invention. To the extent that the same elements as in Figure 4 are used in Figure 8 they have been given the same reference number. In this embodiment, disk 140 and disk 141 have a series of supports 142 at or near the outer edge 130 of the disks. As shown, these supports 142 are nubs formed on the outer edges of both disks 140 and 141, although if desired they could be formed on only one edge of each disk, this edge preferably being the same through out the filter assembly.

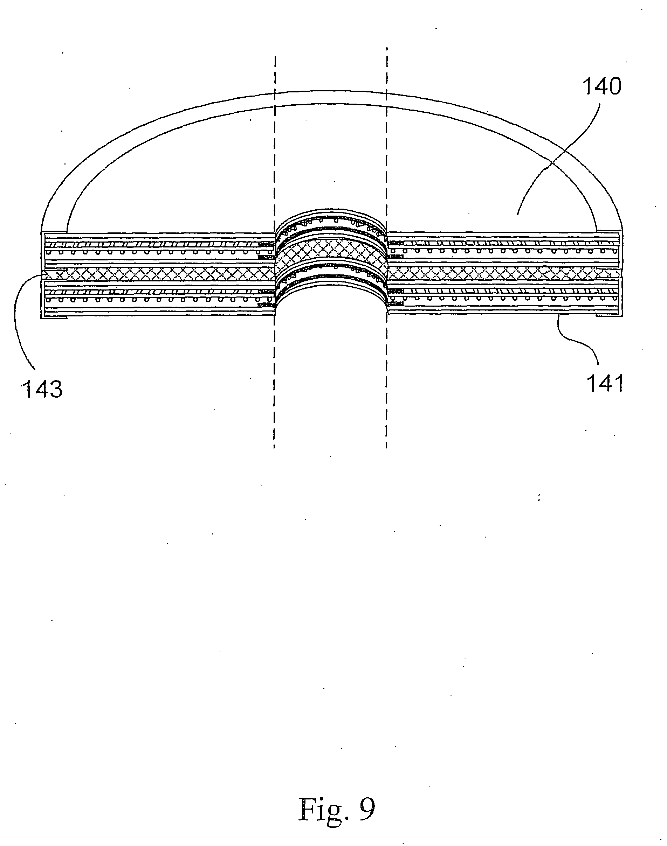

Figure 9 shows an alternative embodiment in cross sectional view of two adjacent disks according to the present invention. To the extent that the same elements as in Figure 9 are used in Figure 4 they have been given the same reference number. In lieu of the supports 142 of Figure 8, one uses a separate support layer 143 such as the same material used to form the central support layer 124 of each disk. This support layer 143 extends from the outer edge 130 of each disk to the center aperture 125, forming a space or relatively constant distance between the adjacent disks so that fluid may flow between the disks and access all of the surface area of the fibrous media 121 on both sides 122, 123 of each disk.

The device of the present invention has significantly more capacity for a given area than the prior art devices. For example, in a large scale device of the present invention, one can easily achieve twice the capacity of a current lenticular product. Typically, one can obtain from about 2 to about 5 times the capacity of a lenticular product. This is due to the reduction in space used by the support and the ability to add additional filter media in lieu of the bulky lenticular support in that area.

Additionally, as the device has the same basic configuration regardless of scale, one can make linearly scalable devices which enable one to understand how the device will in a given process regardless of the scale at which it is tested, be it lab scale, pilot scale or full production scale.

Moreover, the lenticular supports are molded and tend to warp at higher use pressures or temperatures due to the molded in stresses in the lenticular structures. This causes the supports to warp and bend, cracking the media and reducing flow by contacting the adjacent filter and thereby closing off flow in areas of the device. The supports of the present device do not exhibit the stresses even when made by molding as their relative height as compared to the lenticular device is much smaller and the supports have significantly less strength as compared to the lenticular design so that they are unable to distort the entire filter structure as occu rs with the lenticular design.

More importantly, the system of the present invention, comprised of a series of individual filters is self supported. That is each filter contacts the other either via the nubs on the outer edges (if used) or the feed flow device interposed between the adjoining filters. The filters stay flat and lay adjacent to each other with the feed flow device allowing the necessary upstream flow of fluid into the media. This makes the devices self supporting, something not contemplated by the current lenticular designs. Additionally, due to the relatively flat and self supported design, there is less swelling, distortion and cracking of the media than occurs with the current lenticular design. As each filter lays flat against the next filter and the feed flow device, such as a bi-directional screen of Figure 9, is interposed between them the weight of the entire system controls the level of swelling of the media that may occur. Additional as discussed the filters do not warp which means that issues of media cracking and distortion are eliminated.

## Claims

1. A filter device comprising:
a non-lenticular central support layer (124;132);
one or more layers of relatively flat, porous fibrous filtration media (121) positioned upstream on both sides of said central support layer (124;132);
an inner seal (131) between the filtration media (121) and the support layer (124;132) and an outer seal (130) formed over the filtration media (121) and the support layer (124;132) to form a liquid seal such that all fluid to be filtered must pass through the filtration media (121) before entering the support layer (124;132) and reaching an outlet of said filter device which is in fluid communication with said support layer (124;132).

2. The filter device of claim 1, wherein the support layer (124;132) is selected from the group consisting of bi-directional screens, porous metal sheets and porous plastic sheets.

3. The filter device of claim 1 or 2, wherein the support (124) is formed of one or more layers of bi-directional screens (124;132).

4. The filter device of claim 3, wherein the bi-directional screens are formed of two layers (127,128;133,134) of support arms, the first layer having a series of parallel support arms and the second layer having a series of parallel support arms, the support arms of the first layer being at an angle of between 5 and 175° to the arms of the second layer.

5. The filter device of claim 3, wherein the bi-directional screens are formed of two layers (127,128;133,134), the first layer being at an angle of between 5 and 175° to the second layer.

6. The filter device of claim 3, wherein the bi-directional screens are formed of two layers, the first layer being formed of a series of radial arms (135) and the second layer being formed of a series of parallel linear arms (137).

7. The filter device of claim 3, wherein the bi-directional screens are formed of two layers, the first layer being formed of a series of radial arms (135) and the second layer being formed of a series of spaced concentric rings (136).

8. The filter device of any one of claims 1 to 7, wherein said filter device comprises a central aperture for the passage of fluid formed by central apertures of the layers of filtration media and support, said outlet of the filter device being located at said central aperture.

9. A filtration system comprising:
a housing (51) having a removable member to provide access to the interior of the housing (51),
an inlet (49) and an outlet (50) to/from the interior of the housing (51), and
an assembly formed of a plurality of filter devices according to claim 8, said filter devices being stacked upon each other such that said central apertures of the filter devices being contiguously juxtaposed to define an open central core of said assembly having opposed first and second ends and such that the adjacent filter devices are spaced apart each other so that fluid may flow between opposing sides (122,123) of adjacent filter devices emanating radially from the central aperture, said first end being connected to the outlet (50) of the housing (51), said second end being closed.

10. The filtration system of claim 9, wherein the adjacent filter devices in said assembly are spaced apart each other by means of supports (142) at or near outer peripheral edges of the filter devices.

11. The filtration system of claim 9, wherein the adjacent filter devices in said assembly are spaced apart each other by means of a support layer (143) sandwiched between the opposing sides (122,123) of adjacent filter devices.

12. The filtration system of claim 11, wherein said support layer (143) is of the same material as that used for the central support layer (124;132) of the filter devices.
